# FASCICULE DE BREVET EUROPEEN

(11) **EP 2 711 687 B1**
(45) Date de publication et mention de la délivrance du brevet: **08.04.2015**
(21) Numéro de dépôt: 13185205.5
(22) Date de dépôt: 19.09.2013
(51) Int. Cl.: G01N 21/35, G01N 21/03, G01N 21/61

(54) **Détecteur optique de gaz**
Optischer Gasdetektor
Optical gas detector

(30) Priorité: 20.09.2012 FR 1258832
(43) Date de publication de la demande: 26.03.2014
(73) Titulaire: COMMISSARIAT A L'ENERGIE ATOMIQUE ET AUX ENERGIES ALTERNATIVES, 75015 Paris (FR)
(72) Inventeur: Nicoletti, Sergio, 38650 SINARD (FR); Barritault, Pierre, 38100 GRENOBLE (FR); Brun, Mickaël, 38320 EYBENS (FR)
(74) Mandataire: Thibon, Laurent

(56) Documents cités:
- US-A- 5 401 966
- US-A1- 2011 190 605
- US-B1- 7 119 337

## Description

### Domaine de l'invention

La présente invention concerne un détecteur optique de présence et éventuellement de teneur d'un gaz dans une atmosphère.

### État de la technique

Il est connu d'utiliser des détecteurs optiques de présence d'un gaz, par exemple de dioxyde de carbone CO₂, de monoxyde de carbone CO, de méthane ou éventuellement de divers gaz toxiques tels que du xylène ou du toluène dégagés par les peintures. Il est à noter qu'un détecteur de présence d'un excès de CO₂ peut constituer un détecteur d'incendie.

On s'intéressera ici à des détecteurs optiques qui détectent la présence d'un gaz en mesurant l'absorption d'un faisceau lumineux à une ou plusieurs longueurs d'onde correspondant à une ou plusieurs raies d'absorption du gaz considéré. Dans de tels détecteurs, un faisceau optique est émis par une source lumineuse émettant dans une plage de longueurs d'onde incluant la ou les longueurs d'onde de raies d'absorption caractéristiques du gaz à détecter. Un récepteur précédé d'un filtre à la longueur d'onde de la raie d'absorption à détecter indique l'absorption à cette longueur d'onde, et on peut en déduire la présence et la teneur du gaz considéré. Pour que de tels détecteurs fonctionnent de façon satisfaisante, on prévoit généralement deux récepteurs, ou deux zones de réception, le deuxième récepteur étant destiné à fournir une indication de référence à des longueurs d'onde autres que la longueur d'onde de la raie d'absorption. Cette référence sert notamment à tenir compte de fluctuations environnementales et/ou de fluctuations d'intensité de la source d'émission.

Pour que l'ensemble du système détecteur de gaz ait un encombrement réduit, on prévoit souvent que le faisceau lumineux se propageant entre l'émetteur et le récepteur fasse un ou plusieurs trajets en aller-retour par l'intermédiaire de systèmes réflecteurs. On prévoit par exemple que des faisceaux lasers subissent des réflexions multiples dans une cavité résonante dans laquelle le gaz à détecter est susceptible d'être présent.

Des dispositifs selon l'état de la technique antérieure sont décrits dans les documents US 7 119 337 et US 5401966.

De façon générale, les systèmes détecteurs de gaz existants impliquant au moins un aller-retour de faisceaux lumineux entre l'émetteur et le récepteur présentent l'inconvénient d'être relativement délicats à fabriquer. En effet, ils nécessitent un positionnement précis de l'émetteur et du récepteur par rapport aux surfaces réflectrices déterminant le trajet optique entre l'émetteur et le récepteur.

Ainsi, il existe un besoin pour un détecteur optique de gaz par absorption qui soit particulièrement simple à fabriquer et qui soit tolérant à des défauts d'alignement entre l'émetteur, les surfaces réflectrices et le récepteur.

### Résumé

Un mode de réalisation prévoit un dispositif selon la revendication 1 palliant au moins certains des inconvénients des dispositifs existants.

Pour cela, un mode de réalisation de la présente invention prévoit un détecteur de gaz comprenant un ensemble de deux calottes réflectrices paraboliques coaxiales dont les concavités sont en regard, et une plaquette disposée dans le plan focal des deux calottes, au centre de ce plan focal, comprenant dos à dos : un émetteur de lumière divergent tourné vers la première calotte et un récepteur de lumière tourné vers la deuxième calotte, dans lequel les deux calottes sont distantes sensiblement de la somme de leurs distances focales plus l'épaisseur de la plaquette.

Selon un mode de réalisation de la présente invention, les deux calottes paraboliques sont liées à une monture fixant la distance entre elles.

Selon un mode de réalisation de la présente invention, la monture est un cylindre.

Selon un mode de réalisation de la présente invention, le récepteur de lumière comprend au moins deux parties détectant des longueurs d'onde différentes.

Selon un mode de réalisation de la présente invention, la plaquette repose sur une languette maintenue par une monture d'assemblage des calottes, la languette étant située dans le plan focal des calottes.

Selon un mode de réalisation de la présente invention, la languette est en un matériau transparent aux longueurs d'onde que le détecteur de gaz vise à détecter.

Selon un mode de réalisation de la présente invention, l'émetteur et le récepteur de lumière sont formés dans des parties de plaques accolées par leur face arrière.

Selon un mode de réalisation de la présente invention, les plaques sont en un matériau transparent à la longueur d'onde susceptible d'être détectée, et sont accolées avec interposition d'une couche d'un matériau opaque.

Selon un mode de réalisation de la présente invention, le matériau opaque est un métal.

Selon un mode de réalisation de la présente invention, le métal est percé d'une ouverture permettant une communication optique directe entre l'émetteur et l'un au moins des récepteurs.

### Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :
la figure 1 est une vue en coupe d'un mode de réalisation d'un détecteur optique de gaz tolérant à des défauts d'alignement ;
la figure 2A est une vue en coupe à un stade intermédiaire d'assemblage d'un mode de réalisation d'un ensemble émetteur-récepteur-filtre ;
la figure 2B est une vue de dessus partielle d'un élément de l'ensemble de la figure 2A ;
la figure 2C est une vue en coupe d'une variante de réalisation d'un ensemble émetteur-récepteur-filtre ; et
la figure 3 est une vue en perspective d'un mode de réalisation d'un détecteur optique de gaz par absorption.

### Description détaillée

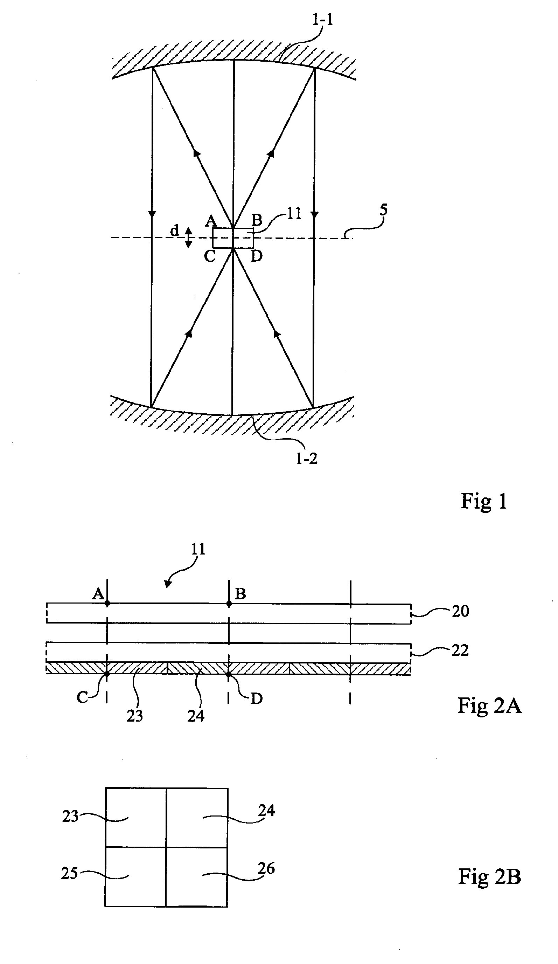

La figure 1 est une vue en coupe présentant un mode de réalisation d'un détecteur de gaz par absorption selon un mode de réalisation.

Le détecteur comprend deux calottes paraboliques coaxiales 1-1 et 1-2 dont les concavités sont en regard. Ces calottes paraboliques sont sensiblement confocales. Ainsi, l'image d'un point disposé sur une face du plan focal se forme sur la face opposée de ce plan focal.

Un ensemble émetteur-récepteur 11 est disposé au niveau du plan focal commun 5 des deux calottes paraboliques. L'ensemble émetteur-récepteur 11 est représenté sous forme d'une petite plaquette ayant une face émettrice AB tournée vers l'une des calottes paraboliques 1-1 et une face réceptrice CD tournée vers la calotte parabolique opposée 1-2. Ainsi, l'image de l'émetteur se forme sur le récepteur. Si on appelle d l'épaisseur de la plaquette 11, la distance axiale entre les sommets des deux calottes paraboliques sera égale à la somme de leurs distances focales à laquelle on ajoute l'épaisseur d.

Des simulations effectuées par les inventeurs montrent qu'un tel système est pratiquement insensible à des déréglages dans une certaine mesure. Ces simulations ont notamment permis d'établir le tableau suivant :

| Mouvement | Amplitude Déplacement (µm) | Puissance relative sur récepteur | Mouvement du spot dans le plan du récepteur (µm) |
|---|---|---|---|
| Les deux miroirs se déplacent de la même quantité dans la même direction et latéralement. | 0 | 100 | 0 |
| | 10 | 100 | 20 |
| | 20 | 95 | 40 |
| | 30 | 83 | 60 |
| | 40 | 68 | 80 |
| Le miroir côté source, ou le miroir côté récepteur, se déplace seul latéralement. | 0 | 100 | 0 |
| | 10 | 100 | 10 |
| | 20 | 100 | 20 |
| | 30 | 99 | 30 |
| | 40 | 95 | 40 |
| Les deux miroirs se déplacent de la même quantité dans la même direction ou dans des sens opposés et en profondeur. | 50 | 95 | |
| | -50 | 95 | |
| Le miroir côté source, ou le miroir côté récepteur, se déplace seul, en profondeur. | -100 | 97 | |
| | +100 | 97 | |

Si la source et le récepteur sont déplacés ensemble, cela n'a que peu d'influence sur la capacité du système à bien fonctionner si la source est dans l'axe de symétrie du système optique. De même si l'on rapproche un peu la source du premier hémisphère, on constate que les rayons se retrouvent encore focalisés sur le récepteur sous réserve que celui-ci ait suivi le mouvement de la source. Le dispositif proposé offre ainsi une certaine stabilité géométrique.

En outre, pour les déplacements latéraux, le spot image ne se déforme pas et se déplace dans le plan image. Si on déplace d'une distance x un seul miroir, le spot se déplace de la même valeur x sur le récepteur. Si on déplace les deux miroirs d'une distance x chacun, le spot se déplace de 2x sur le récepteur. Pour un déplacement en profondeur, la tache image reste centrée et seul son diamètre varie.

Cette importante tolérance de positionnement est notamment liée au fait que la partie émettrice, côté AB, et la partie réceptrice, côté CD, de l'ensemble émetteur-récepteur 11 sont accolées tête-bêche en un bloc unique, d'où il résulte que l'émetteur et le ou les récepteurs se déplacent ensemble et que ce déplacement simultané compense les conséquences d'éventuelles erreurs de positionnement.

La figure 2A illustre, à titre d'exemple, une étape de fabrication d'un exemple de réalisation d'un ensemble émetteur-récepteur 11. De nombreux émetteurs sont formés sur une première plaque 20, par exemple une plaque de silicium ou une plaque en un matériau isolant tel que du saphir.

L'émetteur est de préférence un émetteur non directionnel ou peu directionnel (émetteur divergent) tel qu'un filament chauffé. Cet émetteur ne sera pas décrit en détail car sa technologie de fabrication est bien connue. Il peut s'agir d'un filament de platine ou de nitrure de titane formé sur la plaque par tout moyen connu. En fonctionnement, ce filament est chauffé à une température propre à fournir une quantité de rayonnement suffisante dans une plage de longueurs d'onde contenant la raie d'absorption à détecter. Cette température est de préférence supérieure à 250°C, par exemple comprise entre 350°C et 650°C pour une longueur d'onde de détection de 4,25 µm dans le cas où le gaz à détecter est du CO₂. Avantageusement, une telle température est compatible avec une durée de vie élevée du filament.

Les récepteurs du côté CD du dispositif 11 sont formés sur une deuxième plaque 22 également par tout moyen connu. La deuxième plaque est de préférence une plaque de silicium dans laquelle sont intégrés des composants passifs (résistances) ou actifs (diodes ou transistors) dont des caractéristiques se modifient en fonction de leur échauffement à la réception de rayons infrarouges. Notamment, les récepteurs peuvent être des capteurs bolométriques, constitués par exemple d'une membrane qui absorbe les rayons infrarouges en chauffant, la hausse de température de la membrane impliquant une variation de sa résistance détectable, ou encore des capteurs pyrométriques ou thermopiles.

Chaque récepteur du côté de la face CD peut être revêtu d'au moins un filtre. Deux filtres 23, 24 sont visibles dans la vue en coupe de la figure 2A, respectivement centrés sur la raie d'absorption à détecter et sur une longueur d'onde de référence. Ces filtres peuvent correspondre à des empilements de couches minces diélectriques. Il peut aussi s'agir d'une alternance de bandes métalliques et isolantes dont le pas et l'espacement déterminent la fréquence de filtrage.

Ensuite, les plaques 20 et 22 sont accolées l'une à l'autre de sorte que les faces AB et CD constituent des faces externes opposées, et découpées en plaquettes élémentaires, correspondant chacune à un ensemble émetteur-récepteur, selon les lignes de découpe illustrées en pointillés verticaux en figure 2A. La jonction mécanique entre les plaques 20 et 22 peut être réalisée à l'aide d'une couche adhésive assurant une liaison permanente, par exemple en un polymère ou en un alliage or/étain (AuSn) ou aluminium/silicium (AlSi). On notera que la formation d'une couche métallique entre les deux substrats sert à former un écran pour le récepteur pour qu'il ne soit pas perturbé par la radiation de la source si les substrats utilisés sont transparents dans l'infrarouge.

La vue de dessous de la figure 2B représente un cas où l'on a prévu côté récepteur quatre filtres 23, 24, 25, 26 destinés par exemple à recevoir respectivement une longueur d'onde ou une plage de longueurs d'onde de référence et trois longueurs d'onde ou plages de longueurs d'onde particulières, correspondant par exemple à trois raies ou bandes d'absorption d'un même gaz à détecter ou à des raies ou bandes d'absorption de plusieurs gaz à détecter. Chaque filtre est associé à un récepteur, par exemple de type bolométrique. La plaquette 11 fait par exemple de 1 à 5 mm de côté et de 0,5 à 1,5 mm d'épaisseur.

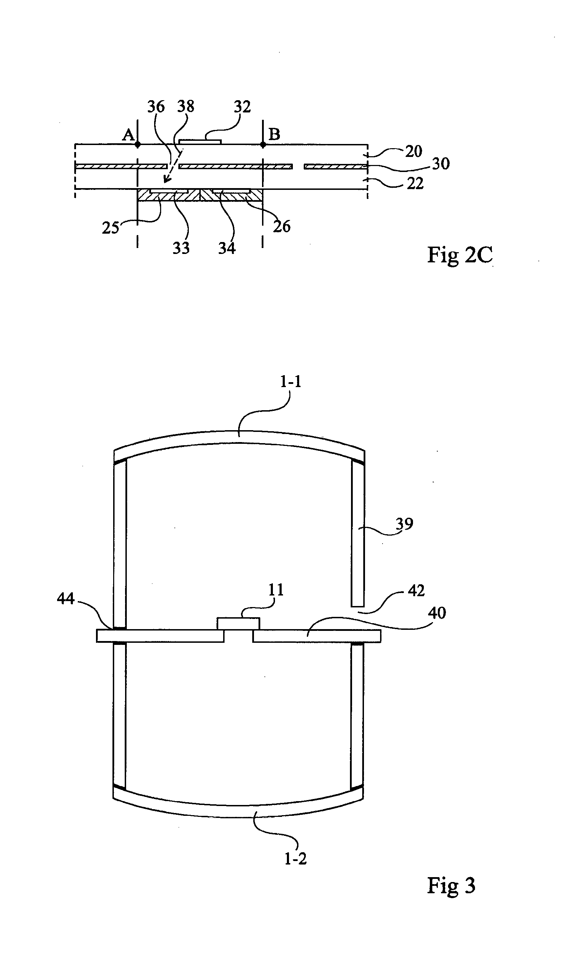

La figure 2C est une vue en coupe d'une variante de réalisation d'un ensemble émetteur-récepteur-filtre. Dans certains cas, les plaques 20, 22 sont transparentes aux longueurs d'onde concernées. C'est le cas par exemple de plaques de silicium et de longueurs d'onde voisines de 4,25 µm. C'est aussi plus généralement le cas de la plupart des matériaux semiconducteurs tels que Ge, SiGe, CdSe, AsGa, InP, etc. qui sont transparents au moins dans certaines plages de rayonnement infrarouge. On propose dans ce cas de prévoir entre l'émetteur et le ou les récepteurs une couche faisant barrière à la transmission de rayonnements directs à travers les plaques. On pourra par exemple prévoir, comme cela est représenté, une couche 30 opaque aux rayonnements, par exemple une couche métallique, formée sur l'une au moins des deux plaques avant leur assemblage.

Dans la représentation de la figure 2C, on a symbolisé par un rectangle 32 la zone d'émetteur sur la face AB de la plaque supérieure et par des rectangles 33, 34 deux zones de récepteur sur la face CD de la plaque inférieure, respectivement recouvertes de filtres 25, 26. La couche opaque 30 comporte, dans une variante de réalisation, une ouverture 36 pour laisser passer un rayonnement direct 38 de l'émetteur 32 vers le récepteur 33. Dans cette variante, le "filtre" 25 recouvrant le récepteur 33 est alors opaque. Le récepteur 33 fournit alors un signal de référence représentatif des seules fluctuations de l'émetteur 32.

La figure 3 est une vue en coupe représentant un exemple de montage du bloc émetteur-récepteur 11 à l'intérieur d'une monture maintenant en position les calottes paraboliques 1-1 et 1-2. La monture est par exemple constituée d'un cylindre 39 aux extrémités duquel sont fixées, par exemple par collage, les calottes paraboliques 1-1 et 1-2. Ce cylindre a une hauteur telle que la distance axiale entre les centres des calottes paraboliques est égale à deux fois la distance focale de ces calottes plus l'épaisseur d de l'émetteur-récepteur 11. On notera que d'autres formes pourront être utilisées pour la monture.

La plaquette 11 est montée sur une languette 40 sur laquelle courent des pistes métalliques (non représentées) destinées à assurer les connexions vers l'émetteur et le ou les récepteurs. La languette peut être en un matériau transparent dans la plage de longueurs d'onde à détecter, par exemple en silicium ou en saphir, ces matériaux étant sensiblement transparents à une longueur d'onde de 4,25 µm. La languette 40 pourra également comprendre, en regard de la plaquette 11, une ouverture destinée à laisser le passage aux rayons lumineux vers le ou les récepteurs.

Dans l'exemple représenté, qui n'est pas limitatif, la languette 40 repose en appui sur une ouverture 42 de la monture 39 et vient s'encastrer dans une ouverture diamétralement opposée 44 de cette monture.

On comprendra que la présente invention est susceptible de nombreuses variantes tant en ce qui concerne le nombre d'émetteurs optiques, le nombre de récepteurs optiques et de filtres associés, ainsi que la nature de ces émetteurs et récepteurs et la réalisation de l'assemblage tête-bêche d'un émetteur et de récepteurs.

En outre, le dépôt métallique permettant de rendre réflectrices les faces intérieures des calottes paraboliques peut être réalisé de sorte que la surface réflectrice soit légèrement rugueuse pour rendre floue l'image du filament sur le récepteur.

Bien que dans les figures, les distances focales des deux calottes paraboliques 1-1 et 1-2 soient représentées comme sensiblement égales, on notera que ces distances focales peuvent être nettement différentes, pour que l'image de l'émetteur sur le ou les récepteurs soit réduite ou agrandie. Ce choix sera fait notamment en fonction de la technique de fabrication utilisée.

Bien que cela n'ait pas été décrit, on comprendra que la monture, par exemple le cylindre 39 est perforé pour laisser communiquer l'intérieur de l'enceinte définie par le cylindre et les calottes sphériques avec l'extérieur.

Bien que la monture destinée à assurer le positionnement relatif des deux calottes paraboliques 1-1 et 1-2 ait été décrite et représentée comme un cylindre, on notera que toute monture peut être utilisée. On pourra par exemple utiliser des piliers, par exemple trois piliers reliant les deux calottes, ces piliers pouvant être réglables en dimension pour permettre un réglage fin du système.

L'homme de l'art pourra choisir librement les dimensions du détecteur en fonction des composants utilisés, des gaz à détecter et de leurs concentrations. Par exemple, dans le cas d'un bloc détecteur tel que celui représenté en figure 3, la dimension longitudinale pourra être de l'ordre de 5 à 10 cm et le diamètre de l'ordre de 1 à 3 cm.

## Revendications

1. Détecteur de gaz comprenant :
un ensemble de deux calottes réflectrices paraboliques coaxiales (1-1, 1-2) dont les concavités sont en regard, et
une plaquette (11) disposée dans le plan focal des deux calottes, au centre de ce plan focal, comprenant dos à dos :
- au moins un émetteur de lumière divergent (AB) tourné vers la première calotte (1-1), et
- au moins un récepteur de lumière (CD) tourné vers la deuxième calotte (1-2),
dans lequel les deux calottes sont distantes sensiblement de la somme de leurs distances focales plus l'épaisseur (d) de la plaquette, ledit détecteur étant **caractérisé en ce que** la plaquette est constituée de parties de plaques (20, 22) en un matériau transparent à la longueur d'onde susceptible d'être détectée, accolées avec interposition d'une couche d'un matériau opaque percée d'une ouverture (36) permettant une communication optique (38) directe entre l'émetteur et l'un au moins des récepteurs.

2. Détecteur selon la revendication 1, dans lequel le matériau opaque est un métal (30).

3. Détecteur selon la revendication 1 ou 2, dans lequel les deux calottes paraboliques sont liées à une monture fixant la distance entre elles.

4. Détecteur selon la revendication 3, dans lequel la monture est un cylindre (39).

5. Détecteur selon l'une quelconque des revendications 1 à 4, dans lequel le récepteur de lumière (CD) comprend au moins deux parties détectant des longueurs d'onde différentes.

6. Détecteur selon l'une quelconque des revendications 1 à 5, dans lequel la plaquette (11) repose sur une languette (40) maintenue par une monture d'assemblage desdites calottes, ladite languette étant située dans ledit plan focal des calottes.

7. Détecteur selon la revendication 6, dans lequel la languette (40) est en un matériau transparent aux longueurs d'onde que le détecteur de gaz vise à détecter.

## Patentansprüche

1. Ein Gasdetektor, der Folgendes aufweist:
eine Anordnung aus zwei koaxialen parabolförmigen Kappen (1-1, 1-2) mit entgegengesetzten Hohlräumen, und
einen Wafer (11), angeordnet in der Fokalebene der zwei Kappen an der Mitte dieser Fokalebene und zwar Rücken an Rücken, Folgendes aufweisend:
- mindestens einen divergierenden Lichtemitter (AB), gerichtet zu der ersten Kappe (1-1) hin, und
- mindestens einen Lichtempfänger (CD), gerichtet zu der zweiten Kappe (1-2) hin,
wobei die zwei Kappen beabstandet sind im Wesentlichen durch die Summe ihrer Fokalabstände plus die Dicke (d) des Wafers,
wobei der Detektor **dadurch gekennzeichnet** ist, dass der Wafer aus Teilen der Platten (20, 22) geformt ist, aus einem Material transparent für die wahrscheinlich zu detektierende Wellenlänge, wobei die Teile gegeneinander platziert sind mit einer dazwischen liegenden Schicht aus einem opaken Material, durchbohrt mit einer Öffnung (36) die eine direkte optische Verbindung (38) zwischen dem Emitter und mindestens einem der Empfänger vorsieht.

2. Der Detektor nach Anspruch 1, wobei das opake Material ein Metall (30) ist.

3. Der Detektor nach Anspruch 1 oder 2, wobei die zwei Parabolkappen mit einer Befestigung verbunden sind, die den Abstand zwischen den Platten bestimmt.

4. Der Detektor nach Anspruch 3, wobei die Befestigung ein Zylinder (39) ist.

5. Der Detektor nach einem der Ansprüche 1 bis 4, wobei der Lichtempfänger (CD) mindestens zwei Teile aufweist, die unterschiedliche Wellenlängen detektieren.

6. Der Detektor nach einem der Ansprüche 1 bis 5, wobei der Wafer (11) durch einen Ansatz (40) getragen ist, und zwar gehalten durch eine Befestigung für die Anordnung der Kappen, wobei der Ansatz in der erwähnten fokalen Ebene der Kappen angeordnet ist.

7. Der Detektor nach Anspruch 6, wobei der Ansatz (40) aus einem Material hergestellt ist, das für die Wellenlängen die der Gasdetektor detektieren soll transparent ist.

## Claims

1. A gas detector comprising:
an assembly of two coaxial parabolic caps (1-1, 1-2) having opposite concavities, and
a wafer (11) arranged in the focal plane of the two caps, at the center of this focal plane, comprising, back to back:
- at least one diverging light emitter (AB) directed towards the first cap (1-1), and
- at least one light receiver (CD) directed towards the second cap (1-2),
wherein the two caps are distant substantially by the sum of their focal distances plus the thickness (d) of the wafer,
said detector being **characterized in that** the wafer is formed of portions of plates (20, 22) of a material transparent to the wavelength likely to be detected, that are placed against each other with an interposed layer of an opaque material pierced with an opening (36) providing a direct optical communication (38) between the emitter and one at least of the receivers.

2. The detector of claim 1, wherein the opaque material is a metal (30).

3. The detector of claim 1 or 2, wherein the two parabolic caps are connected to a mount setting the distance between them.

4. The detector of claim 3, wherein the mount is a cylinder (39).

5. The detector of any of claims 1 to 4, wherein the light receiver (CD) comprises at least two portions detecting different wavelengths.

6. The detector of any of claims 1 to 5, wherein the wafer (11) is supported by a tab (40) maintained by a mount for assembling said caps, said tab being located in said focal plane of said caps.

7. The detector of claim 6, wherein the tab (40) is made of a material transparent to the wavelengths that the gas detector aims at detecting.
